# EUROPÄISCHE PATENTSCHRIFT

(11) **EP 3 836 790 B1**
(45) Veröffentlichungstag und Bekanntmachung des Hinweises auf die Patenterteilung: **07.06.2023**
(21) Anmeldenummer: 19762094.1
(22) Anmeldetag: 14.08.2019
(51) Int. Cl.: A01N 65/08, A01P 17/00

(54) **ZUSAMMENSETZUNG ZUR VERGRÄMUNG VON SCHADORGANISMEN**
COMPOSITION FOR REPELLING DAMAGING ORGANISMS
COMPOSITION POUR L'EFFAROUCHEMENT D'ORGANISMES NUISIBLES

(30) Priorität: 14.08.2018 DE 102018006384; 14.08.2018 DE 202018003749 U
(43) Veröffentlichungstag der Anmeldung: 23.06.2021
(73) Patentinhaber: MATTHESIUS, Christian, 86853 Langerringen (DE)
(72) Erfinder: MATTHESIUS, Christian, 86853 Langerringen (DE)
(74) Vertreter: Knöner, Gregor
(86) Internationale Anmeldenummer: PCT/EP2019/071884
(87) Internationale Veröffentlichungsnummer: WO 2020/035547

(56) Entgegenhaltungen:
- EP-A1- 2 601 841
- DE-A1- 1 800 085
- DE-A1-102007 061 639
- US-A1- 2005 220 914
- US-A1- 2013 210 626
- "Iso-Extrakt 30 % (Isomerisierter Hopfen-Extrakt)", , 1. November 2009 (2009-11-01), Seiten 1-3, XP55631391, Mainburg, Germany Gefunden im Internet: URL:http://www.hopsteiner.de/fileadmin/red eakteur/pdf/hopfenprodukte/brauereien-prod ukte/11_08_iso%20extrakt30.pdf [gefunden am 2019-10-14]
- .: "MSDS: Isohop", , 1. August 2007 (2007-08-01), Seiten 1-3, XP55631397, U.K. Gefunden im Internet: URL:https://www.yumpu.com/en/document/read /11406869/isohopr [gefunden am 2019-10-14]
- .: "Hopfenextrakt isomerisiert 6%", Webshop, 16. Oktober 2019 (2019-10-16), Seiten 1-9, XP55632620, Belgium Gefunden im Internet: URL:https://www.brouwland.com/de/unsere-pr odukte/bierbrauen/hopfen/extrakte-aroma-s- ckchen/d/hopfenextrakt-isomerisiert-6-30ml [gefunden am 2019-10-16] -& .: "Preisliste 2010 Produkte zur Bierherstellung", , 22. März 2010 (2010-03-22), Seiten 1-7, XP55632616, Mahlow, Germany Gefunden im Internet: URL:http://www.mikrobrau-berlin.de/PREISLI STE2008.pdf [gefunden am 2019-10-16] -& .: "Hopfenextrakt isomerisiert 6%", Webshop, 13. Januar 2015 (2015-01-13), Seite 1, XP55632624, Gefunden im Internet: URL:https://www.amazon.de/Hopfenextrakt-is omerisiert-6-Alpha-30/dp/B00S6O0G2Y?ref_=a st_bbp_dp [gefunden am 2019-10-16] -& .: "Brouwland Catalog 2012-2013 (French)", , 22. Mai 2012 (2012-05-22), Seiten 1-214, XP55633646, Beverlo, Belgium Gefunden im Internet: URL:http
- .: "Hopfen CO2-to Extrakt Typ Nr. 081.002", , 20. März 2018 (2018-03-20), Seiten 1-2, XP55631393, Rehlingen, Germany Gefunden im Internet: URL:https://www.flavex.com/produkt_pdf.php ?id=260 [gefunden am 2019-10-14]
- JONES G ET AL: "REPELLENT AND OVIPOSITION-DETERRING EFFECTS OF HOP BETA-ACIDS ON THE TWO-SPOTTED SPIDER MITE TETRANYCHUS URTICAE", PESTICIDE SCIENCE, ELSEVIER APPLIED SCIENCE PUBLISHER. BARKING, GB, Bd. 47, Nr. 2, 1. Juni 1996 (1996-06-01), Seiten 165-169, XP000629094, ISSN: 0031-613X, DOI: 10.1002/(SICI)1096-9063(199606)47:2<165::A ID-PS392>3.3.CO;2-I
- EDWARD RÓJ ET AL: "Supercritical carbon dioxide hops extracts with antimicrobial properties", OPEN CHEMISTRY, Bd. 13, Nr. 1, 11. Januar 2015 (2015-01-11), Seiten 1157-1171, XP055235923, DOI: 10.1515/chem-2015-0131
- DE KEUKELEIRE D: "Fundamentals of beer and hop chemistry", QUIMICA NOVA, SOCIEDADE BRASILEIRA DE QUIMICA, BR, Bd. 23, Nr. 1, 1. Januar 2000 (2000-01-01) , Seiten 108-112, XP002561344, ISSN: 0100-4042
- .: "Isohop (EN, REV. 2)", , 4. Dezember 2018 (2018-12-04), Seiten 1-3, XP55631395, Nuremberg, Germany Gefunden im Internet: URL:https://www.barthhaasgroup.com/images/ downloads/pdfs/products/667/isohopen.pdf [gefunden am 2019-10-14]
- Till Gabriel: "Die Passauer Mauerblümchen - Der Hopfen", Pasta! Passauer Stadtmagazin, 1. Mai 2016 (2016-05-01), Seite 47, XP55632822, Passau, Germany Gefunden im Internet: URL:https://issuu.com/pastamag/docs/pasta_ mai_2016_-_web [gefunden am 2019-10-16]
- K.K. Aggarwal ET AL: "Toxicity of l-menthol and its derivatives against four storage insects", International Journal of Tropical Insect Science, 1 September 2001 (2001-09-01), pages 229-235, XP055724350, DOI: 10.1017/S1742758400007621 Retrieved from the Internet: URL:http://www.journals.cambridge.org/abst ract_S1742758400007621 [retrieved on 2020-08-21]
- Dwijendra Singh ET AL: "Menthol containing formulation inhibits adzuki bean beetle, Callosobruchus chinensis L. (Coleoptera; Bruchidae) population in pulse grain storage", Journal of Biopesticides, 1 September 2010 (2010-09-01), pages 596-603, XP055724348, Tamil Nadu Retrieved from the Internet: URL:http://eprints.icrisat.ac.in/10642/1/J ournalofBiopesticides_3_3_596-603_2010.pdf [retrieved on 2020-08-21]
- Yujie Lu ET AL: "Fumigation toxicity of allicin against three stored product pests", JOURNAL OF STORED PRODUCTS RESEARCH., vol. 55, 1 October 2013 (2013-10-01), pages 48-54, XP055724376, GB ISSN: 0022-474X, DOI: 10.1016/j.jspr.2013.08.002
- F. Swatonek: "Die Entwicklung der Dörrobstmotte (Plodia interpunctella H.) in verschiedenen Handelsqualitäten von Gewürzpaprika", ANZEIGER FUER SCHAEDLINGSKUNDE PFLANZENSCHUTZ UMWELTSCHUTZ., vol. 46, no. 7, 1 July 1973 (1973-07-01), pages 107-109, XP055724378, DE ISSN: 0003-6307, DOI: 10.1007/BF02303448
- Mina Mohammadi ET AL: "Ovicidal and adulticidal effects of synthetic menthol, thymol and their mixtures against Tetranychus urticae (Acari: Tetranychidae)", Persian Journal of Acarology, 1 January 2015 (2015-01-01), pages 125-136, XP055724390, Retrieved from the Internet: URL:https://www.researchgate.net/publicati on/271136477_Article_Ovicidal_and_adultici dal_effects_of_synthetic_menthol_thymol_an d_their_mixtures_against_Tetranychus_urtic ae_Acari_Tetranychidae [retrieved on 2020-08-21]
- GUPTA R ET AL: "A STUDY OF THE NEMATICIDAL ACTIVITY OF ALLICIN-AN ACTIVE PRINCIPLE IN GARLIC, ALLIUM SATIVUN L., AGAINST ROOT-KNOT NEMATODE, MELOIDOGYNE INCOGNITA (KOFOID AND WHITE, 1919) CHITWOOD, 1949", INTERNATIONAL JOURNAL OF PEST MANAGEMENT, TAYLOR AND FRANCIS, GB, vol. 39, no. 4, 1 January 1993 (1993-01-01), pages 390-392, XP001156217, ISSN: 0967-0874
- Vinay Kumar Singh: "Mollusciciding Agent of Allium Sativum (Garlic) Allicin", Ann Pharmacol Pharm, 26 April 2017 (2017-04-26), pages 1053.1-1053.2, XP055724395, Retrieved from the Internet: URL:http://www.remedypublications.com/open -access/mollusciciding-agent-of-allium-sat ivum-garlic-allicin-1086.pdf [retrieved on 2020-08-21]
- H Kato-Noguchi ET AL: "Effects of capsaicin on plant growth", Biologia Plantarum, 1 April 2003 (2003-04-01), pages 157-159, XP055724397, DOI: 10.1023/A:1027317906839 Retrieved from the Internet: URL:https://link.springer.com/content/pdf/ 10.1023/A:1027317906839.pdf [retrieved on 2020-08-21]

## Beschreibung

Die Erfindung betrifft eine Zusammensetzung zur Vergrämung von Schadorganismen in der Land- und Forstwirtschaft sowie Landschafts- und Gartenbau zum Schutz von Kultur- und Zierpflanzen sowie ein Verfahren zur Herstellung dieser Verbindung und die Verwendung eines Repellents zur Vergrämung von Schadorganismen. Schadorganismen im Sinne der Erfindung sind Vögel und/oder Säugetiere.

Schadorganismen wie Wildtiere können in der Land- und Forstwirtschaft erhebliche Schäden verursachen. Beispielsweise führt Wildverbiss durch Waldtiere wie Rehe, Rotwild und Wildschweine zu enormen Ernteschäden. Auch Vogelfraß des Saatgutes durch Fasane, Tauben und Krähen und anderen ist ein weit verbreitetes Problem beispielsweise des Maisanbaus. Zu weiteren bekannten Schäden durch Vögel zählen Fraßschäden und Vertritt von durchziehenden, rastenden oder überwinternden Gänsen. Von verschiedenen Singvogelarten ist bekannt, dass sie etwa Knospen von Obstgehölzen verbeißen (Finkenvögel), an Maiskolben fressen (Feldsperling, Meisen, Dompfaff, Elster, Eichelhäher und Rabenkrähe), auflaufendes Getreide oder Raps aufsuchen (Saat- und Rabenkrähe, Ringeltaube), mit freigelegten Kartoffelknollen spielen (Kolkrabe) oder Silageschutzfolien beschädigen (Rabenkrähe). Zum Schutz von Saatgut und Pflanzen werden daher Wildschadenverhütungsmittel eingesetzt.

Gegen Schadvögel wurden Substanzen entwickelt, welche die Tiere vom Fraß an Früchten oder etwa Jungpflanzen abhalten soll. Dabei wird das zu behandelnde Saatgut mit diesen Substanzen gebeizt, welche die ausgebrachten Körner und nachfolgend die Keimlinge für Vögel ungenießbar machen sollen. Diese Substanzen sind jedoch häufig giftig, sodass sie bezüglich ihrer Anwendung als Pflanzenschutzmittel nur eingeschränkt oder zeitlich beschränkt zugelassen werden.

So wurde beispielsweise zur Abwehr des Vogelfraßes nach der Aussaat Anthrachinon als Beizmittel für das Saatgut (z. B. Mais, Weizen, Hafer und Roggen) verwendet. Wegen seiner krebserzeugenden Wirkung im Tierversuch und zu vermutende Krebserzeugung beim Menschen lehnte die EU einen weiteren Antrag auf Zulassung im Rahmen der Richtlinie 91/414/EWG als Pflanzenschutzmittel ab.

Ein weiteres Repellent gegen Vögel und Nagetiere, das zur Beizung von Saatgut verwendet wird, ist Thiram. Der Wirkstoff dient ebenfalls als Wildschadenverhütungsmittel bei Pflanzen. Jedoch ist Thiram giftig, kann Allergien auslösen und die Leber schädigen. Bei Reaktion von Thiram mit nitrosierenden Agentien kann es zur Bildung von kanzerogenen N-Nitrosaminen kommen. Spuren (100-500 ppm) von Thiram über längere Zeit im Futter von Vögeln führen zu weichen Eierschalen, verminderter Legeleistung und Missbildungen beim Geflügel.

Der Wirkstoff Ziram wird als Repellent gegen Wildverbiss und Vogelfraß eingesetzt. Nach den österreichischen Bestimmungen kann Ziram verwendet werden, um gebeiztes Saatgut vor Vogelfraß zu schützen. In Deutschland ist Ziram derzeit nicht zugelassen. Ziram könnte eine hormonelle Wirksamkeit aufweisen, weshalb die Auswirkungen des Wirkstoffs auf die menschliche Gesundheit unter REACH im Rahmen der Stoffbewertung von Dänemark zurzeit geprüft werden.

Ebenfalls als Repellent, insbesondere als Vogelrepellent bei der Saatgutbehandlung von Mais und Zierpflanzen dient der Wirkstoff Methiocarb (Mercaptodimethur). Dieser ist jedoch derart giftig, dass die EU-Zulassung der Verwendung als Molluskizid (Schneckenkorn) am 26. Februar 2014 zum Schutz von Vögeln, Säugetieren und Nichtzielarthropoden gestrichen wurde. Seine Wirkung als Nervengift kommt über eine Hemmung der Acetylcholinesterase zustande. Methiocarb wirkt auch auf das Nervensystem von Schnecken, die zunächst hyperaktiv werden, dann jedoch den Muskeltonus verlieren und an Ort und Stelle sterben. Der Wirkstoff ist auch für Wasserlebewesen sehr giftig. Für Menschen ist er ebenfalls giftig und kann zu Erbrechen, Durchfall, Atemnot und Lungenödemen führen.

Die im Stand der Technik bekannten Repellents sind giftig und/oder in anderer Weise schädlich oder stehen im Verdacht giftig und/oder in anderer Weise schädlich zu sein. Dementsprechend lag der Erfindung die Aufgabe zugrunde, ein verbessertes Mittel zur Vergrämung von Schadorganismen, insbesondere gegen Wildbiss und Vogelfraß, zur Verfügung zu stellen.

Das Dokument "Iso-Extrakt 30% (Isomerisierter Hopfen-Extrakt)", 1. November 2009, Seiten 1-3, abgerufen am 14.10.2019 unter "http://www.hopsteiner.de/fileadmin/redeakteur/pdf/hopfenprodukte/brauereienprodukte/11 _ 08 _iso%20extrakt30. pdf", beschreibt einen Hopfenextrakt zur Verwendung im Bierbrauen, der während des Brauvorganges zugegeben wird.

Das Dokument "MSDS: Isohop", 1. August 2007, Seiten 1-3, abgerufen am 14.10.2019 unter "https://www.yumpu.com/en/document/read/11406869/isohopr", beschreibt ebenfalls einen Hopfenextrakt zur Verwendung beim Brauen von Bier, der während eines Brauvorgangs als Bitterstoff nach der Gärung zugesetzt wird (Postfermentation Bittering).

Die Druckschrift US 2013/210626 A1 beschreibt ein Pflanzenbehandlungsmittel enthaltend einen Hopfenextrakt zum Schutz gegen phytopathogene Mikroben, Aphididae, Tortricidae und Cicadellidae. Als Repellent gegen Vögel kann optional Methanol eingesetzt werden.

Die Druckschrift DE 18 00 085 A1 beschreibt, dass zur Vermeidung des aufwendigen Behandelns von Pflanzen gegen Wildverbiss durch Bestreichen mit chemischen Mitteln der Pflanze über die Wurzeln ein Bitterstoff, insbesondere Nikotinsäure, zugeführt wird.

Der Artikel "Die Passauer Mauerblümchen - Der Hopfen", Till Gabriel, Pasta! Passauer Stadtmagazin, 1. Mai 2016, Seite 47, beschreibt, dass die Bitterstoffe im Hopfen verhindern, dass die Samen der Pflanze dem Vogelfraß zum Opfer fallen. Der Artikel befasst sich lediglich mit der natürlichen Bitterkeit des Hopfens.

Die Aufgabe wird von der erfindungsgemäßen Zusammensetzung und der erfindungsgemäßen Verwendung gelöst.

Auf die in den Unteransprüchen wiedergegebenen bevorzugten Ausgestaltungen der Erfindung wird ausdrücklich Bezug genommen.

Die erfindungsgemäße Zusammensetzung zur Vergrämung von Schadorganismen umfasst ein Gemisch,
wobei das Gemisch wenigstens eine Verbindung umfasst, ausgewählt aus der Gruppe, bestehend aus Humulonen (α-Säuren), Lupulonen ((3-Säuren), Isohumulonen (Iso-α-Säuren), Oxidationsprodukten der Lupulone wie Huluponen und Luputrionen, Allo-Isohumulonen, Abeo-Isohumulonen (oxidierten Isohumulonen), Anti-Isohumulonen, Spiro-Isohumulonen, Humelinsäuren, Dihydro-Isohumulonen (Rho-Isohumulonen), Tetrahydro-Isohumulonen und Hexahydro-Isohumulonen.

Die erfindungsgemäße Zusammensetzung zur Vergrämung von Schadorganismen umfasst des Weiteren wenigstens ein Pflanzenschutzmittel und/oder Pflanzenhilfsmitte

Pflanzenhilfsmittel werden hier auch als Pflanzenstärkungsmittel bezeichnet.

Erfindungsgemäß ist das wenigstens eine Pflanzenschutzmittel und/oder Pflanzenstärkungsmittel ein Düngemittel.

Die erfindungsgemäße Zusammensetzung ist in Abhängigkeit des wenigstens einen Pflanzenschutzmittels und/oder Pflanzenhilfsmittels biologisch abbaubar, ungiftig, anwendersicher und umweltsicher und kann somit auch in der ökologischen Landwirtschaft (Bio-Landbau) und in der ökologischen Forstwirtschaft eingesetzt werden. Die erfindungsgemäße Zusammensetzung dient der Vergrämung von Schadorganismen, insbesondere von Vögeln und/oder Säugetieren. Sie kann insbesondere als Repellent oder Wildschadenverhütungsmittel genutzt werden. Sie kann zum Schutz von Saatgut, Kulturpflanzen und/oder Zierpflanzen vor Vogelfraß und/oder Wildbiss eingesetzt werden.

Der Begriff "Schadorganismen" bezeichnet allgemein Schädlinge und Lästlinge, wie beispielsweise Vögel (unter anderem Krähen, insbesondere Saatkrähen, Tauben, Fasane) und Säugetiere (unter anderem Hasen, Ratten, Mäuse, Rehe, Wildschweine), Insekten, Spinnen und dergleichen sowie Bakterien, Viren und Pilze. Im Zusammenhang mit dem Begriff "Wildschadenverhütungsmittel" bezeichnet der Begriff "Schadorganismen" ausschließlich Vögel (unter anderem Krähen, insbesondere Saatkrähen, Tauben, Fasane) und Säugetiere (unter anderem Hasen, Ratten, Mäuse, Rehe, Wildschweine) als Schädlinge und Lästlinge, wobei diese ausdrücklich nicht auf Wild oder Wildtiere beschränkt sind.

Erfindungsgemäss sind als "Schadorganismen" Vögel und/oder Säugetiere zu verstehen.

Der Begriff "Wildschadenverhütungsmittel", wie er hier in der Beschreibung und in den Ansprüchen verwendet wird, bezeichnet ein Mittel zur Bekämpfung von Schadorganismen (Vögel und Säugetiere), die in der Landwirtschaft Beschädigungen der von Landwirten genutzten Flächen und deren Saat sowie der Feldfrucht oder die in der Forstwirtschaft Beschädigungen der Flora durch Verbiss, Schälung und Reiben (Fegen) an Forstpflanzen hervorrufen.

Der Begriff "Kultur- und Zierpflanzen", wie er hier in der Beschreibung und in den Ansprüchen verwendet wird, umfasst alle in der Land- und Forstwirtschaft sowie im Landschafts- und Gartenbau kultivierten Pflanzen, wie beispielsweise Getreide wie Weizen, Dinkel, Roggen, Hafer, Gerste, Triticale, Hirse, Mais, Reis und Bambussamen, Leguminosen, Gemüse wie Kartoffeln, Steinobst-, Kernobst-, Beerenobst- und Schalenobstgewächse, Kürbisgewächse, Holzgewächse, Reben sowie Gewürz- und Heilpflanzen, Zierpflanzen und dergleichen.

Der Begriff "Repellent", wie er hier in der Beschreibung und in den Ansprüchen verwendet wird, umfasst Mittel, die abwehrend oder vertreibend auf andere Lebewesen, insbesondere Schadorganismen, wirken. Häufig bewirken solche Mittel durch ihren unangenehmen Geschmack oder Geruch, dass die Schadorganismen sich beispielsweise von Nahrung oder von bestimmten Plätzen fernhalten.

In einer besonderen Ausführungsform umfasst die erfindungsgemäße Zusammensetzung wenigstens 1 Vol.-%, bezogen auf das Volumen der Zusammensetzung, des Gemischs, bevorzugt wenigstens 5 Vol.-%, wenigstens 7 Vol.-%, wenigstens 8 Vol.-% oder wenigstens 10 Vol.-% des Gemischs, bezogen auf das Volumen der Zusammensetzung. In einer weiteren bevorzugten Ausführungsform umfasst die erfindungsgemäße Zusammensetzung wenigstens 12 Vol.-%, bezogen auf das Volumen der Zusammensetzung, des Gemischs, bevorzugt wenigstens 17 Vol.-%, wenigstens 21 Vol.-%, wenigstens 25 Vol.-% oder wenigstens 27 Vol.-% des Gemischs, bezogen auf das Volumen der Zusammensetzung. In einer weiteren besonderen Ausführungsform umfasst die erfindungsgemäße Zusammensetzung bis zu 99,9 Vol.-%, bezogen auf das Volumen der Zusammensetzung, des Gemischs, bevorzugt 1-99 Vol.-%, 5-98 Vol.-%, 30-95 Vol.-% oder 35-80 Vol.-% des Gemischs, bezogen auf das Volumen der Zusammensetzung. Die Zusammensetzung kann bei einer Ausführungsform neben dem Pflanzenschutzmittel und/oder Pflanzenstärkungsmittel, welches ein Düngemittel ist, als Rest Wasser umfassen.

In einer weiteren Ausführungsform umfasst die erfindungsgemäße Zusammensetzung wenigstens 1 Vol.-%, bezogen auf das Volumen der Zusammensetzung, des Pflanzenschutzmittels und/oder Pflanzenhilfsmittels, bevorzugt wenigstens 2 Vol.-%, wenigstens 5 Vol.-%, wenigstens 8 Vol.-% oder wenigstens 10 Vol.-% des Pflanzenschutzmittels und/oder Pflanzenhilfsmittels, bezogen auf das Volumen der Zusammensetzung. In einer weiteren Ausführungsform umfasst die erfindungsgemäße Zusammensetzung wenigstens 20 Vol.-%, bezogen auf das Volumen der Zusammensetzung, des Pflanzenschutzmittels und/oder Pflanzenhilfsmittels, bevorzugt wenigstens 35 Vol.-%, wenigstens 50 Vol.-%, wenigstens 65 Vol.-% oder wenigstens 80 Vol.-% des Pflanzenschutzmittels und/oder Pflanzenhilfsmittels, bezogen auf das Volumen der Zusammensetzung. In einer weiteren besonderen Ausführungsform umfasst die erfindungsgemäße Zusammensetzung bis zu 99,9 Vol.-%, bezogen auf das Volumen der Zusammensetzung, des Pflanzenschutzmittels und/oder Pflanzenhilfsmittels, bevorzugt 1-99 Vol.-%, 5-98 Vol.-%, 30-95 Vol.-% oder 35-80 Vol.-% des Pflanzenschutzmittels und/oder Pflanzenhilfsmittels, bezogen auf das Volumen der Zusammensetzung.

In einer anderen Ausführungsform umfasst die erfindungsgemäße Zusammensetzung wenigstens 1 Vol.-%, bezogen auf das Volumen der Zusammensetzung, des Gemischs, wenigstens 1 Vol.-%, bezogen auf das Volumen der Zusammensetzung, eines Pflanzenschutzmittels und/oder Pflanzenhilfsmittels und als Rest Wasser.

Geeignete Humulone sind unter anderem Cohumulon, Adhumulon, Humulon (n-Humulon), Prähumulon und Posthumulon, bevorzugt Cohumulon, Adhumulon und Humulon.

Geeignete Lupulone sind unter anderem Colupulon, Adlupulon, Lupulon (n-Lupulon), Prälupulon und Postlupulon.

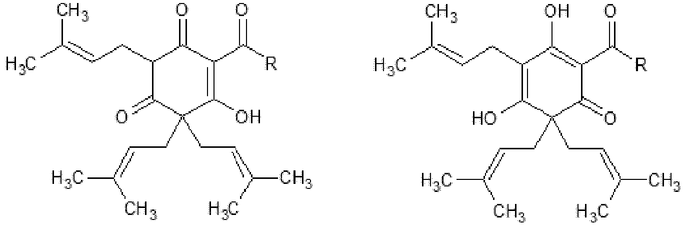

### Lupulone

| | |
|---|---|
| | -R |
| Colupulon | -CH(CH₃)₂ |
| n-Lupulon | -CH₂CH(CH₃)₂ |
| Adlupulon | -CH(CH₃)-CH₂-CH₃ |
| Prälupulon | -CH₂-CH₂-CH(CH₃)₂ |
| Postlupulon | -CH₂-CH₃ |

### Humulone

| | |
|---|---|
| | -R |
| Cohumulon | -CH(CH₃)₂ |
| n-Humulon | -CH₂CH(CH₃)₂ |
| Adhumulon | -CH(CH₃)-CH₂-CH₃ |
| Prähumulon | -CH₂-CH₂-CH(CH₃)₂ |
| Posthumulon | -CH₂-CH₃ |

Geeignete Isohumulone sind *cis*-Isohumulone und *trans*-Isohumulone, insbesondere Isocohumulon, Isoadhumulon, Isohumulon (Iso-n-Humulon), Isoprähumulon und Isoposthumulon, bevorzugt Isocohumulon, Isoadhumulon, Isohumulon. Geeignete Isohumulone sind unter anderem cis-Isocohumulon, cis-Isoadhumulon, cis-Isohumulon (cis-Iso-n-Humulon), *cis*-Isoprähumulon, cis-Isoposthumulon, *trans*-Isocohumulon, *trans-*Isoadhumulon, *trans*-Isohumulon (*trans*-Iso-n-Humulon), *trans*-Isoprähumulon und *trans-*Isoposthumulon und chemisch modifizierte Isohumulonderivate wie Dihydro-Isohumulone, Tetrahydro-Isohumulone und Hexahydro-Isohumulone. Bevorzugt sind *cis-*Isohumulone.

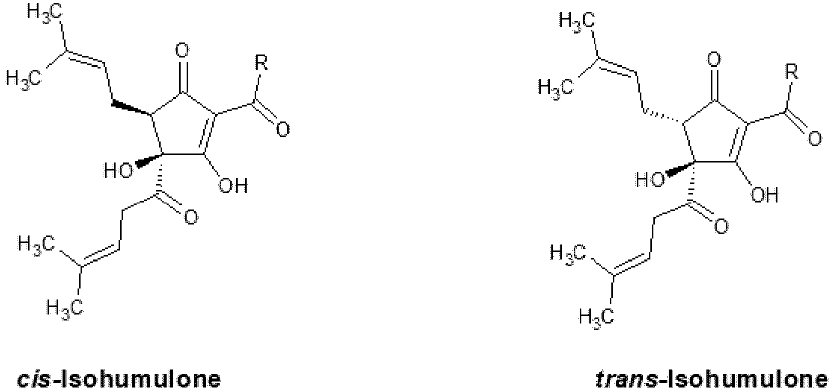

| | |
|---|---|
| | -R |
| Isocohumulon | -CH(CH₃)₂ |
| Iso-n-Humulon | -CH₂CH(CH₃)₂ |
| Isoadhumulon | -CH(CH₃)-CH₂-CH₃ |
| Isoprähumulon | -CH₂-CH₂-CH(CH₃)₂ |
| Isoposthumulon | -CH₂-CH₃ |

Geeignete Dihydro-Isohumulone sind unter anderem *cis*-Dihydro-Isocohumulon, *cis-*Dihydro-Isoadhumulon, *cis*-Dihydro-Isohumulon (*cis*-Dihydro-Iso-n-Humulon), *cis-*Dihydro-Isoprähumulon, *cis*-Dihydro-Isoposthumulon, *trans*-Dihydro-Isocohumulon, *trans*-Dihydro-Isoadhumulon, *trans*-Dihydro-Isohumulon (*trans*-Dihydro-Iso-n-Humulon), *trans*-Dihydro-Isoprähumulon und *trans*-Dihydro-Isoposthumulon.

Geeignete Tetrahydro-Isohumulone sind unter anderem *cis*-Tetrahydro-Isocohumulon, *cis-*Tetrahydro-Isoadhumulon, *cis*-Tetrahydro-Isohumulon (*cis*-Tetrahydro-Iso-n-Humulon), *cis*-Tetrahydro-Isoprähumulon, *cis*-Tetrahydro-Isoposthumulon, *trans-*Tetrahydro-Isocohumulon, *trans*-Tetrahydro-Isoadhumulon, *trans*-Tetrahydro-Isohumulon (*trans*-Tetrahydro-Iso-n-Humulon), *trans*-Tetrahydro-Isoprähumulon und *trans*-Tetrahydro-Isoposthumulon.

Geeignete Hexahydro-Isohumulone sind unter anderem *cis*-Hexahydro-Isocohumulon, *cis*-Hexahydro-Isoadhumulon, *cis*-Hexahydro-Isohumulon (*cis*-Hexahydro-Iso-n-Humulon), *cis*-Hexahydro-Isoprähumulon, *cis*-Hexahydro-Isoposthumulon, *trans-*Hexahydro-Isocohumulon, *trans*-Hexahydro-Isoadhumulon, *trans*-Hexahydro-Isohumulon (*trans*-Hexahydro-Iso-n-Humulon), *trans*-Hexahydro-Isoprähumulon und *trans*-Hexahydro-Isoposthumulon.

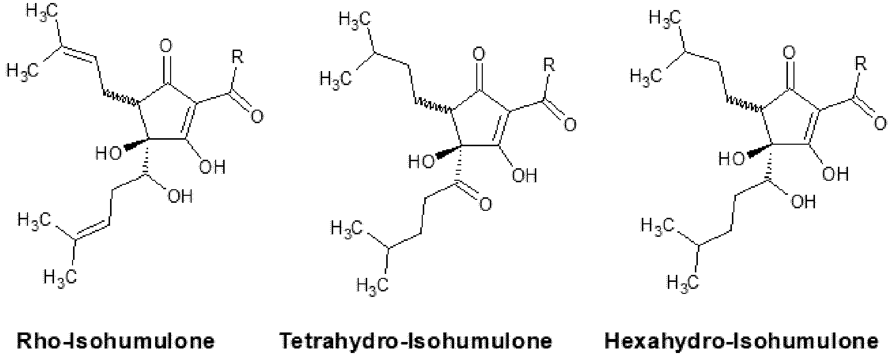

| | |
|---|---|
| | -R |
| Rho-/Tetrahydro-/Hexahydro-Isocohumulon | -CH(CH₃)₂ |
| Rho-/Tetrahydro-/Hexahydro-Iso-n-Humulon | -CH₂CH(CH₃)₂ |
| Rho-/Tetrahydro-/Hexahydro-Isoadhumulon | -CH(CH₃)-CH₂-CH₃ |
| Rho-/Tetrahydro-/Hexahydro-Isoprähumulon | -CH₂-CH₂-CH(CH₃)₂ |
| Rho-/Tetrahydro-/Hexahydro-Isoposthumulon | -CH₂-CH₃ |

Geeignete Hulupone sind unter anderem n-Hulupon, Cohulupon und Adhulupon.

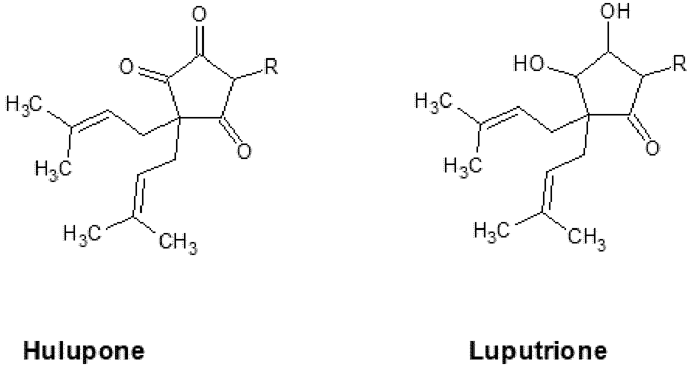

| | |
|---|---|
| | -R |
| Cohulupon/-luputrion | -CH(CH₃)₂ |
| n-Hulupon/-Luputrion | -CH₂CH(CH₃)₂ |
| Adhulupon/-luputrion | -CH(CH₃)-CH₂-CH₃ |
| Prähulupon/-Iuputrion | -CH₂-CH₂-CH(CH₃)₂ |
| Posthulupon/-Iuputrion | -CH₂-CH₃ |

In einer Ausführungsform umfasst das Gemisch Humulone, Lupulone, Isohumulone, Hulupone, Dihydro-Isohumulone, Tetrahydro-Isohumulone und/oder Hexahydro-Isohumulone. In einer bevorzugten Ausführungsform umfasst das Gemisch Humulone, Isohumulone, Dihydro-Isohumulone, Tetrahydro-Isohumulone und/oder Hexahydro-Isohumulone. In einer weiter bevorzugten Ausführungsform Isohumulone, Tetrahydro-Isohumulone und/oder Hexahydro-Isohumulone.

In einer besonders bevorzugten Ausführungsform umfasst das Gemisch Isohumulone. Das Gemisch kann weitere der vorab genannten Verbindungen enthalten, wie z.B. Humulone oder Lupulone. Aufgrund ihrer Bitterkeit erzielen Isohumulone eine besonders gute Wirkung bei der Vergrämung von Schadorganismen, insbesondere von Vögeln und/oder Säugetieren.

In einer bevorzugten Ausführungsform wird das von der erfindungsgemäßen Zusammensetzung umfasste Gemisch aus Hopfen gewonnen, insbesondere aus Hopfenzapfen (Hopfendolden, weiblichen Blütenstände, Ähren) und/oder ihren Drüsenhaaren (Hopfendrüsen, Lupuli glandula, Hopfenmehl, Lupulin). Der Begriff Hopfenzapfen schließt, wenn nicht anders beschrieben, frische, getrocknete, gemahlene und gepresste/pelletierte Hopfenzapfen ein. Hopfenzapfen können unter anderem frisch und/oder getrocknet verwendet werden. Das Gemisch wird bevorzugt aus Rohhopfen, Hopfenpellets oder Hopfenextrakten gewonnen. Hopfenpellets können aus gemahlenem Hopfen bestehen. Hopfenextrakte können unter anderem Ethanol-Extrakte, Ether-Extrakte und CO₂-Extrakte (Extraktion mit überkritischem Kohlenstoffdioxid) sein.

Geeignete Gemische sind ausgewählt aus der Gruppe, bestehend aus gemahlenen Hopfenzapfen, Hopfenmehl, Hopfenharz, Hopfen-Hartharz, Hopfen-Weichharz, α-Weichharz, β-Weichharz, Humulonen (α-Säuren) sowie ihren Derivaten, insbesondere IsohumuloneDihydro-Isohumulone, Tetrahydro-Isohumulone und Hexahydro-Isohumulone, und Lupulone (β-Säuren) sowie ihren Derivaten, insbesondere Hulupone und Luputrione.

In einer bevorzugten Ausführungsform umfasst das Gemisch einen ganz oder teilweise isomerisierten Ethanol- oder CO₂-Extrakt. Der Begriff "isomerisiert" bezieht sich auf die ganz oder teilweise Umsetzung der Humulonen zu Isohumulonen. In einer Ausführungsform sind 1 - 100 % der Humulonen umgesetzt, bevorzugter sind mehr als 5 %, 15 %, 30 % oder mehr als 60 % der Humulonen umgesetzt. In einer bevorzugten Ausführungsform sind 50 - 100 % der Humulonen umgesetzt, insbesondere sind mehr als 65 %, 80 %, 95 % oder mehr als 99 % der Humulonen umgesetzt. In einer Ausführungsform umfasst das Gemisch einen Ethanol-Extrakt aus Hopfenzapfen, insbesondere einen ganz oder teilweise isomerisierten Extrakt, bei dem Hopfenzapfen mit einer Alkohol-Wasser-Mischung extrahiert wurde. Bevorzugt umfasst das Gemisch den sogenannten Reinharz-Extrakt. In einer anderen Ausführungsform umfasst das Gemisch den sogenannten Tannin-Extrakt sowie den Reinharz-Extrakt. In einer besonders bevorzugten Ausführungsform umfasst das Gemisch einen ganz oder teilweise isomerisierten CO₂-Extrakt.

Das Gemisch kann Mischungen verschiedener Extrakte enthalten.

Geeignete Hopfensorten sind unter anderem Wilder Hopfen, Kulturhopfen, Aromahopfen, Bitterhopfen, Hochalphabittersorten, Hochalphasorten, wobei Hochalphabittersorten, Hochalphasorten bevorzugt sind.

Geeignete Pflanzenschutzmittel und Pflanzenhilfsmittel (auch Pflanzenstärkungsmittel genannt) umfassen Pestizide (Schädlingsbekämpfungsmittel), wie Insektizide, Rodentizide, Akarizide, Bakterizide, Fungizide, Nematizide, Ovizide, Viruzide und Molluskizide, Herbizide (Unkrautbekämpfungsmittel), insbesondere Graminizide, Wachstumsregulatoren, Saatgutschutzmittel, Vorratsschutzmittel, Düngemittel. Bevorzugt sind die Pflanzenschutzmittel und die Pflanzenhilfsmittel für den Bio-Landbau und die ökologische Forstwirtschaft geeignet. Erfindungsgemäss handelt es sich bei dem Pflanzenschutzmittel und/oder Pflanzenstärkungsmittel um ein Düngemittel.

Geeignete Düngemittel umfassen Flüssigdünger, wie Düngerlösungen und -suspensionen, Düngergranulate oder Salze. Geeignete Flüssigdünger schließen Blattdünger ein.

In einer bevorzugten Ausführungsform ist das Pflanzenschutzmittel und/oder Pflanzenhilfsmittel ein Flüssigdünger.

Geeignete Düngemittel sind unter anderem Stickstoff-, Kalium-, Phosphor-, Magnesium-, Schwefel- und Calciumdünger sowie Düngemittel, die Bor, Chlor, Kupfer, Eisen, Mangan, Molybdän, Nickel und/oder Zink enthalten.

In einer Ausführungsform umfasst die erfindungsgemäße Zusammensetzung 5-30 Vol.-%, bevorzugt 7-25 Vol.-%, bezogen auf das Volumen der Zusammensetzung, eines vollständig isomerisierten CO₂-Extrakts von Hopfen. Bevorzugt umfasst die erfindungsgemäße Zusammensetzung wenigstens 10-17 Vol.-%, bezogen auf das Volumen der Zusammensetzung, des Extrakts.

In einer Ausführungsform umfasst die erfindungsgemäße Zusammensetzung 8-30 Vol.-%, bevorzugt 12-25 Vol.-%, bezogen auf das Volumen der Zusammensetzung, eines vollständig isomerisierten CO₂-Extrakts von Aromahopfen. Bevorzugt umfasst die erfindungsgemäße Zusammensetzung wenigstens 17 Vol.-%, bezogen auf das Volumen der Zusammensetzung, des Extrakts.

In einer weiteren Ausführungsform umfasst die erfindungsgemäße Zusammensetzung 5-27 Vol.-%, bevorzugt 7-21 Vol.-%, bezogen auf das Volumen der Zusammensetzung, eines vollständig isomerisierten CO₂-Extrakts von Hochalphasorten. Bevorzugt umfasst die erfindungsgemäße Zusammensetzung wenigstens 10 Vol.-%, bezogen auf das Volumen der Zusammensetzung, des Extrakts.

In einer anderen Ausführungsform umfasst die erfindungsgemäße Zusammensetzung 10-35 Vol.-%, bevorzugt 15-25 Vol.-%, bezogen auf das Volumen der Zusammensetzung, eines Gemischs, das 30 % (w/w) Isohumulone, Tetrahydro-Isohumulone und/oder Hexahydro-Isohumulone, bevorzugt Isohumulone, enthält. Bevorzugt umfasst die erfindungsgemäße Zusammensetzung wenigstens 20 Vol.-%, bezogen auf das Volumen der Zusammensetzung, des Gemischs. Das Gemisch kann auch einen anderen Anteil an Isohumulonen, Tetrahydro-Isohumulonen und/oder Hexahydro-Isohumulonen, bevorzugt Isohumulonen enthalten, z.B. zwischen 10 und 60% (w/w).

In einer Ausführungsform enthält die Zusammensetzung mindestens 3 Gew.-% (w/w), vorzugsweise mindestens 4,5 Gew.-% Isohumulone, Tetrahydro-Isohumulone und/oder Hexahydro-Isohumulone, bezogen auf das Gewicht der Zusammensetzung.

Beispielsweise enthält die Zusammensetzung 3-10,5 Gew.-% (w/w), vorzugsweise 4,5-7,5 Gew.-% Isohumulone, Tetrahydro-Isohumulone und/oder Hexahydro-Isohumulone, bevorzugt Isohumulone, bezogen auf das Gewicht der Zusammensetzung. Das Gemisch ist beispielsweise ein isomerisierter Hopfen-Extrakt, der 30 % (w/w) Isohumulone, Tetrahydro-Isohumulone und/oder Hexahydro-Isohumulone in wässriger Lösung enthält (insbesondere isomerisierte Alphasäuren des Hopfens). Da die Dichte eines solchen Gemisches ähnlich der von Wasser bzw. von herkömmlichem Pflanzenhilfsmittel ist, enthält eine Zusammensetzung, die 10-35 Vol.-% (bezogen auf das Volumen der Zusammensetzung) des Gemischs umfasst, einen Anteil von ca. 3-10,5 Gew.-% Isohumulone, Tetrahydro-Isohumulone und/oder Hexahydro-Isohumulone.

In einer weiteren Ausführungsform umfasst die erfindungsgemäße Zusammensetzung 20 Vol.-%, bezogen auf das Volumen der Zusammensetzung, des Gemischs und 80 Vol.-%, bezogen auf das Volumen der Zusammensetzung, eines Flüssigdüngers, wobei das Gemisch 30 % (w/w) Isohumulone, Tetrahydro-Isohumulone und/oder Hexahydro-Isohumulone, bevorzugt Isohumulone, enthält.

Die erfindungsgemäße Zusammensetzung kann als Beizmittel zur Behandlung von Saatgut, Keimlingen oder Jungpflanzen aller Kultur- und Zierpflanzen eingesetzt werden. Weiterhin kann die erfindungsgemäße Zusammensetzung als Repellent zum Schutz vor Wildbiss und/oder Vogelfraß genutzt werden.

Die erfindungsgemäße Zusammensetzung kann weitere Hilfsstoffe wie Farbstoffe, Haftmittel, Trägerstoffe, Netzmittel, Verdünnungsmittel, Lösungsmittel wie Wasser und/oder Formulierungshilfsmittel umfassen.

In einer Ausführungsform umfasst die erfindungsgemäße Zusammensetzung zusätzlich Farbstoffe. Eine auffällige Färbung von Pflanzkartoffeln, Getreidesaatgut wie Mais oder anderem Saatgut kann die versehentliche Verwendung als Futter oder zu Nahrungszwecken verhindern. Darüber hinaus ist eine farbige Zusammensetzung hilfreich, um die Vollständigkeit der Beizung beurteilen zu können.

In einer Ausführungsform umfasst die erfindungsgemäße Zusammensetzung zusätzlich Haftmittel. Durch geeignete Haftmittel haftet die erfindungsgemäße Zusammensetzung besser am Saatgut oder an der Pflanze. In einer Ausführungsform ist die erfindungsgemäße Zusammensetzung regenfest, d. h. sie wird durch herabregnendes Wasser nicht oder wenig vom Saatgut oder von der Pflanze gespült.

Die erfindungsgemäße Zusammensetzung kann als Flüssigkeit, insbesondere als wässrige Lösung, als Pulver, als wasserlösliches Granulat oder als wasserlösliches Pulver formuliert werden.

In einer Ausführungsform umfasst die erfindungsgemäße Zusammensetzung zusätzlich übliche Formulierhilfsmittel, um eine möglichst leichte Ausbringung und gute Verteilung auf dem Saatgut oder den Pflanzen zu ermöglichen. Bei Pflanzen wird dies durch verbesserte Benetzung der Blattoberflächen erreicht.

Gemäß einem weiteren Aspekt der vorliegenden Erfindung wird Saatgut bereitgestellt, das mit einer der vorab beschriebenen Zusammensetzungen behandelt ist, insbesondere gebeizt ist.

Hierin beschrieben - jedoch nicht beansprucht - ist ein Verfahren zur Herstellung der erfindungsgemäßen Zusammensetzung, das den folgenden Schritt umfasst a) Mischen eines Pflanzenschutzmittels und/oder Pflanzenhilfsmittels und eines Gemischs, das wenigstens eine Verbindung umfasst, ausgewählt aus der Gruppe, bestehend aus Humulonen, Lupulonen, Isohumulonen, Oxidationsprodukten der Lupulone wie Huluponen und Luputrionen, Allo-Isohumulonen, Abeo-Isohumulonen, Anti-Isohumulonen, Spiro-Isohumulonen, Humelinsäuren, Dihydro-Isohumulonen, Tetrahydro-Isohumulonen und Hexahydro-Isohumulonen.

Schritt a) des Verfahrens kann vor Verwendung der herzustellenden Zusammensetzung durchgeführt werden. In einer anderen Ausführungsform wird in Schritt a1) ein Pflanzenschutzmittel und/oder Pflanzenhilfsmittel auf Saatgut oder auf Pflanzen aufgebracht und in Schritt a2) ein Gemisch, das wenigstens eine Verbindung umfasst, ausgewählt aus der Gruppe, bestehend aus Humulonen, Lupulonen, Isohumulonen, Oxidationsprodukten der Lupulone wie Huluponen und Luputrionen, Allo-Isohumulonen, Abeo-Isohumulonen, Anti-Isohumulonen, Spiro-Isohumulonen, Humelinsäuren, Dihydro-Isohumulonen, Tetrahydro-Isohumulonen und Hexahydro-Isohumulonen, auf dasselbe Saatgut oder dieselben Pflanzen aufgebracht. Die Schritte a1) und a2) können in beliebiger Reihenfolge, zeitlich versetzt, zeitlich überlappend oder nacheinander durchgeführt werden, um ein Mischen des Pflanzenschutzmittels und/oder Pflanzenhilfsmittels und des Gemischs (Schritt a)) auf dem Saatgut bzw. der Pflanze auszuführen.

Das Verfahren kann weiter folgenden Schritt umfassen b) Hinzugeben von Hilfsstoffen wie Farbstoffe und/oder Formulierungshilfsmitteln.

Der Schritt b) kann vor, nach oder gleichzeitig mit Schritt a) durchgeführt werden. Schritt b) kann mehrfach während des Verfahrens durchgeführt werden.

Ein weiterer Gegenstand der Erfindung ist die Verwendung eines Repellents zur Vergrämung von Schadorganismen ausgewählt aus Vögeln und/oder Säugetieren, wobei das Repellent ein Gemisch umfasst, das aus Hopfen gewonnen ist und/oder wobei das Repellent ein Gemisch umfasst, das wenigstens eine Verbindung umfasst, ausgewählt aus der Gruppe, bestehend aus Humulonen, Lupulonen, Isohumulonen, Oxidationsprodukten der Lupulone wie Huluponen und Luputrionen, Allo-Isohumulonen, Abeo-Isohumulonen, Anti-Isohumulonen, Spiro-Isohumulonen, Humelinsäuren, Dihydro-Isohumulonen, Tetrahydro-Isohumulonen und Hexahydro-Isohumulonen.

Die erfindungsgemäße Verwendung kann zum Schutz von allen Kultur- und Zierpflanzen genutzt werden, insbesondere von jedem in der Landwirtschaft, im Landschafts- und Gartenbau und/oder in der Forstwirtschaft genutzten Saatgut und jeder dort genutzten Pflanze.

In einer Ausführungsform umfasst das Repellent die erfindungsgemäße Zusammensetzung.

In einer Ausführungsform wird ein ganz oder teilweise isomerisierter Hopfenextrakt, beispielsweise vollständig isomerisierter CO₂-Extrakt, insbesondere als Teil der Zusammensetzung, als Repellent zur Vergrämung von Schadorganismen ausgewählt aus Vögeln und/oder Säugetieren verwendet.

In einer Ausführungsform werden Isohumulone zur Vergrämung der Schadorganismen, wie von Vögeln und/oder Säugetieren, verwendet. Die Isohumulone sind beispielsweise in einem Gemisch umfasst, das aus Hopfen gewonnen ist, und das insbesondere ein ganz oder teilweise isomerisierter Hopfen-Extrakt sein kann. Die Isohumulone können als Iso-Alphasäuren in dem Hopfen-Extrakt enthalten sein und beispielsweise Isohumulon, Isocohumulon und Isoadhumulon und andere der vorab genannten Isohumulone enthalten. Die Isohumulone können in dem Gemisch enthalten sein, wobei das Gemisch Teil einer der vorab beschriebenen Zusammensetzungen bzw. des Repellents sein kann.

In einer Ausführungsform wird das Repellent zur Behandlung von Saatgut genutzt, insbesondere zum Beizen von Saatgut. Mit Beizen oder Saatgutbeizung wird in der Land- und Forstwirtschaft sowie im Landschafts- und Gartenbau die Behandlung von Saat- und Pflanzgut bezeichnet, um die Saat oder Pflanzung beispielsweise vor Schädlingen zu schützen, gegen die Sämlinge und Jungpflanzen besonders anfällig sind.

In einer Ausführungsform wird Saatgut, z. B. Getreide wie Weizen, Dinkel, Roggen, Hafer, Gerste, Triticale, Hirse, Mais, Reis, Leguminosen und Bambussamen, vor dem Ausbringen mit dem Repellent gebeizt. Das Beizen findet bevorzugt in einer Beiztrommel, einem Betonmischer, einer Mörtelwanne oder einem anderen geeigneten Gefäß statt. Das gebeizte Saatgut kann bis zur Aussaat fachgerecht gelagert oder direkt nach der Beize verwendet werden. Nach Bedarf kann dem gebeizten Saatgut vor der Aussaat Talkum dazugeben werden, um seine Fließfähigkeit zu verbessern.

In einer weiteren Ausführungsform werden Pflanzkartoffeln vor dem Legen mit dem Repellent gebeizt. Das Beizen kann direkt in der Legemaschine durchgeführt werden. In einer anderen Ausführungsform werden gebeizte Pflanzkartoffeln bis zum Ausbringen fachgerecht gelagert.

In einer anderen Ausführungsform wird das Repellent mit Pflanzenschutzgeräten wie der Feldspritze, Gartenspritze oder anderen Sprühgeräten auf die zu schützenden Pflanzen aufgebracht.

Die Erfindung wird durch die nachfolgenden Beispiele näher erläutert.

### Beispiel 1

Eine Einheit Mais-Saat (50.000 Körner) werden in einer Beiztrommel vorgelegt. Eine gut gemischte Beize, die 50 ml eines Hopfenextrakts, der 30 % (w/w) Isohumulone in wässriger Lösung enthält, und 200 ml einer Zinkoxiddüngersuspension (700 g Zn/l) enthält, wird unter ständigem Rühren zügig zum Saatgut gegeben. Das Saatgut wird so lange gerührt, bis die Beize gleichmäßig auf den Körner verteilt ist.

### Beispiel 2

Eine Einheit Getreide-Saat (50 kg) werden in einer Beiztrommel vorgelegt. Eine gut gemischte Beize, die 50 ml eines Hopfenextrakts, der 30 % (w/w) Isohumulone in wässriger Lösung enthält, und 200 ml einer Zinkoxiddüngersuspension (700 g Zn/l) enthält, wird unter ständigem Rühren zügig zum Saatgut gegeben. Das Saatgut wird so lange gerührt, bis die Beize gleichmäßig auf den Körner verteilt ist.

### Beispiel 3

Zum Schutz vor Vogelfraß wurde wie in Beispiel 1 gebeizter Mais im Freiland auf neun Feldern ausgesäht, auf denen regelmäßig Vogelfraß durch Krähen auftritt.

Experimentell konnte man beobachten, dass die Schäden, die durch Vogelfraß der Maissaat in den Vorjahren regelmäßig auftraten, durch die Anwendung der erfinderischen Zusammensetzung bzw. durch die erfinderische Verwendung eines Repellents drastisch zurückgegangen sind und teilweise nicht mehr auftraten. Die Ergebnisse der Versuche sind in Tabelle 1 dargestellt.

**Tabelle 1: Vogelfraβ**

| Feld-Nr. | Schäden durch Vogelfraß am Saatgut (Vergleichsbeispiel)^{∗} | Schäden durch Vogelfraß am gebeizten Saatgut aus Beispiel 1 |
|---|---|---|
| 1 | vorhanden | keine |
| 2 | Sehr stark | keine |
| 3 | sehr stark | gering |
| 4 | massiv | keine |
| 5 | sehr stark | gering |
| 6 | stark | keine |
| 7 | massiv | gering |
| 8 | sehr stark | gering |
| 9 | sehr stark | gering |

| | | |
|---|---|---|
| *^{∗} Schäden in Vorjahren ohne Beizung mit der erfinderischen Zusammensetzung* | | |

## Patentansprüche

1. Zusammensetzung zur Vergrämung von Vögeln und/oder Säugetieren, wobei die Zusammensetzung ein Repellent zum Schutz vor Vogelfraß und/oder Wildbiss ist, und wobei die Zusammensetzung umfasst:
wenigstens ein Pflanzenschutzmittel und/oder Pflanzenstärkungsmittel und
ein Gemisch,
**dadurch gekennzeichnet, dass** das Gemisch wenigstens eine Verbindung umfasst,
ausgewählt aus der Gruppe, bestehend aus Humulonen, Lupulonen, Isohumulonen, Oxidationsprodukten der Lupulone wie Huluponen und Luputrionen, Allo-Isohumulonen, Abeo-Isohumulonen, Anti-Isohumulonen, Spiro-Isohumulonen, Humelinsäuren, Dihydro-Isohumulonen, Tetrahydro-Isohumulonen und Hexahydro-Isohumulonen und
dass das wenigstens eine Pflanzenschutzmittel und/oder Pflanzenstärkungsmittel ein Düngemittel ist.

2. Zusammensetzung nach Anspruch 1, wobei das Gemisch aus Hopfen gewonnen ist, oder wobei das Gemisch ein ganz oder teilweise isomerisierter Hopfenextrakt ist, oder wobei das Gemisch Isohumulone umfasst.

3. Zusammensetzung nach einem der vorstehenden Ansprüche, wobei die Zusammensetzung wenigstens 1 Vol.-% des Gemischs, vorzugsweise wenigstens 10 Vol.-% des Gemischs, umfasst, bezogen auf das Volumen der Zusammensetzung.

4. Zusammensetzung nach einem der vorstehenden Ansprüche, wobei die Zusammensetzung 5-30 Vol.-%, bevorzugt 7-25 Vol.-%, besonders bevorzugt 10-17 Vol.-%, bezogen auf das Volumen der Zusammensetzung, eines vollständig isomerisierten CO₂-Extrakts von Hopfen umfasst.

5. Zusammensetzung nach einem der vorstehenden Ansprüche, wobei die Zusammensetzung 3-10,5 Gew.-%, vorzugsweise 4,5-7,5 Gew.-%, Isohumulone, Tetrahydro-Isohumulone und/oder Hexahydro-Isohumulone, bevorzugt Isohumulone, enthält, bezogen auf das Gewicht der Zusammensetzung.

6. Zusammensetzung nach einem der vorstehenden Ansprüche, wobei die Zusammensetzung 10-35 Vol.-%, bevorzugt 15-25 Vol.-%, bezogen auf das Volumen der Zusammensetzung, eines Gemischs, das 30 % (w/w) Isohumulone, Tetrahydro-Isohumulone und/oder Hexahydro-Isohumulone, bevorzugt Isohumulone, enthält, umfasst.

7. Zusammensetzung zur Vergrämung von Vögeln und/oder Säugetieren, wobei die Zusammensetzung ein Repellent zum Schutz vor Vogelfraß und/oder Wildbiss ist, und wobei die Zusammensetzung umfasst:
wenigstens ein Pflanzenschutzmittel und/oder Pflanzenstärkungsmittel und
ein Gemisch,
**dadurch gekennzeichnet, dass** das Gemisch wenigstens eine Verbindung umfasst, ausgewählt aus der Gruppe, bestehend aus Humulonen, Lupulonen, Isohumulonen, Oxidationsprodukten der Lupulone wie Huluponen und Luputrionen, Allo-Isohumulonen, Abeo-Isohumulonen, Anti-Isohumulonen, Spiro-Isohumulonen, Humelinsäuren, Dihydro-Isohumulonen, Tetrahydro-Isohumulonen und Hexahydro-Isohumulonen, wobei die Zusammensetzung 5-30 Vol.-%, bevorzugt 7-25 Vol.-%, besonders bevorzugt 10-17 Vol.-%, bezogen auf das Volumen der Zusammensetzung, eines vollständig isomerisierten CO₂-Extrakts von Hopfen umfasst.

8. Saatgut, enthaltend eine Zusammensetzung nach einem der Ansprüche 1-7.

9. Verwendung eines Repellents zur Vergrämung von Vögeln und/oder Säugetieren, wobei das Repellent ein Gemisch umfasst, das wenigstens eine Verbindung umfasst, ausgewählt aus der Gruppe, bestehend aus Humulonen, Lupulonen, Isohumulonen, Oxidationsprodukten der Lupulone wie Huluponen und Luputrionen, Allo-Isohumulonen, Abeo-Isohumulonen, Anti-Isohumulonen, Spiro-Isohumulonen, Humelinsäuren, Dihydro-Isohumulonen, Tetrahydro-Isohumulonen und Hexahydro-Isohumulonen.

10. Verwendung nach Anspruch 9, wobei das Gemisch aus Hopfen gewonnen ist.

11. Verwendung nach Anspruch 9 oder 10, wobei die Verwendung das Behandeln von Saatgut mit dem Repellent zur Vergrämung der Vögel und/oder Säugetiere umfasst, wobei die Verwendung insbesondere das Beizen von Saatgut mit dem Repellent vor dem Ausbringen des Saatguts umfasst.

12. Verwendung nach einem der Ansprüche 9-11, wobei das Gemisch Isohumulone, Tetrahydro-Isohumulone und/oder Hexahydro-Isohumulone, bevorzugt Isohumulone enthält, und diese zur Vergrämung der Vögel und/oder Säugetiere verwendet werden.

13. Verwendung nach einem der Ansprüche 9-12, wobei das Repellent eine Zusammensetzung nach einem der Ansprüche 1 bis 7 ist.

14. Verwendung nach einem der Ansprüche 9-13, wobei die Verwendung zum Schutz von Saatgut, Kulturpflanzen und/oder Zierpflanzen vor dem Vogelfraß und/oder Wildbiss erfolgt.

15. Verwendung von Isohumulonen in einem Gemisch, das aus Hopfen gewonnen ist, zur Vergrämung von Vögeln und/oder Säugetieren.

## Claims

1. Composition for repelling birds and/or mammals, wherein the composition is a repellent for protection against bird predation and/or game bites, and wherein the composition comprises:
at least one plant protection agent and/or plant strengthening agent and
a mixture,
**characterized in that** the mixture comprises at least one compound selected from the group consisting of humulones, lupulones, isohumulones, oxidation products of lupulones such as hulupones and luputriones, allo-isohumulones, abeo-isohumulones, anti-isohumulones, spiro-isohumulones, humelic acids, dihydro-isohumulones, tetrahydro-isohumulones and hexahydro-isohumulones, and
that the at least one plant protection agent and/or plant strengthening agent is a fertilizer.

2. Composition according to claim 1, wherein the mixture is derived from hops, or wherein the mixture is a fully or partially isomerized hop extract, or wherein the mixture comprises isohumulones.

3. Composition according to any of the preceding claims, wherein the composition comprises at least 1 vol% of the mixture, preferably at least 10 vol% of the mixture, based on the volume of the composition.

4. Composition according to any of the preceding claims, wherein the composition comprises 5-30 vol%, preferably 7-25 vol%, more preferably 10-17 vol%, based on the volume of the composition, of a fully isomerized CO₂ extract of hops.

5. Composition according to any of the preceding claims, wherein the composition comprises 3-10.5 wt%, preferably 4.5-7.5 wt%, of isohumulones, tetrahydro-isohumulones and/or hexahydro-isohumulones, preferably isohumulones, based on the weight of the composition.

6. Composition according to any of the preceding claims, wherein the composition comprises 10-35 vol%, preferably 15-25 vol%, based on the volume of the composition, of a mixture containing 30 % (w/w) isohumulones, tetrahydro-isohumulones and/or hexahydro-isohumulones, preferably isohumulones.

7. Composition for repelling birds and/or mammals, wherein the composition is a repellent for protection against bird predation and/or game bites, and wherein the composition comprises:
at least one plant protection agent and/or plant strengthening agent; and
a mixture,
**characterized in that** the mixture comprises at least one compound selected from the group consisting of humulones, lupulones, isohumulones, oxidation products of lupulones such as hulupones and luputriones, allo-isohumulones, abeo-isohumulones, anti-isohumulones, spiro-isohumulones, humelic acids, dihydro-isohumulones, tetrahydro-isohumulones and hexahydro-isohumulones, wherein the composition comprises 5-30 vol%, preferably 7-25 vol%, particularly preferred 10-17 vol%, based on the volume of the composition, of a completely isomerized CO₂ extract of hops.

8. Seed comprising a composition according to any of claims 1-7.

9. Use of a repellent for repelling birds and/or mammals, wherein the repellent comprises a mixture comprising at least one compound selected from the group consisting of humulones, lupulones, isohumulones, oxidation products of lupulones such as hulupones and luputriones, allo-isohumulones, abeo-isohumulones, anti-isohumulones, spiro-isohumulones, humelic acids, dihydro-isohumulones, tetrahydro-isohumulones and hexahydro-isohumulones.

10. Use according to claim 9, wherein the mixture is derived from hops.

11. Use according to claim 9 or 10, wherein said use comprises treating seeds with the repellent for repelling birds and/or mammals, wherein said use in particular comprises dressing seeds with the repellent prior to planting the seeds.

12. Use according to any of claims 9-11, wherein the mixture comprises isohumulones, tetrahydro-isohumulones and/or hexahydro-isohumulones, preferably isohumulones, and these are used for repelling birds and/or mammals.

13. Use according to any of claims 9-12, wherein the repellent is a composition according to any of claims 1 to 7.

14. Use according to any of claims 9-13, wherein the use is for protecting seed, cultivated plants and/or ornamental plants from bird predation and/or game bites.

15. Use of isohumulones in a mixture obtained from hops for repelling birds and/or mammals.

## Revendications

1. Composition pour l'effarouchement d'oiseaux et/ou de mammifères, où la composition est un répulsif pour la protection contre les dégâts provoqués par les oiseaux et/ou par les animaux sauvages, et dans laquelle la composition comprend :
au moins un agent de protection des plantes et/ou un agent de renforcement des plantes et un mélange,
**caractérisé en ce que** le mélange comprend au moins un composé choisi dans le groupe constitué par les humulones, les lupulones, les isohumulones, les produits d'oxydation des lupulones tels que les hulupones et les luputriones, les allo-isohumulones, les abeo-isohumulones, les anti-isohumulones, les spiro-isohumulones, les acides humuliques, les dihydro-isohumulones, les tétrahydro-isohumulones et les hexahydro-isohumulones, et
**en ce que** ledit au moins un agent de protection des plantes et/ou agent de renforcement des plantes est un engrais.

2. Composition selon la revendication 1, dans laquelle le mélange est obtenu à partir de houblon, ou dans laquelle le mélange est un extrait de houblon totalement ou partiellement isomérisé, ou dans laquelle le mélange comprend des isohumulones.

3. Composition selon l'une quelconque des revendications précédentes, dans laquelle la composition comprend au moins 1 % en volume du mélange, de préférence au moins 10 % en volume du mélange, par rapport au volume de la composition.

4. Composition selon l'une quelconque des revendications précédentes, dans laquelle la composition comprend de 5 à 30 % en volume, de préférence de 7 à 25 % en volume, de manière particulièrement préférée de 10 à 17 % en volume, par rapport au volume de la composition, d'un extrait au CO₂ complètement isomérisé de houblon.

5. Composition selon l'une quelconque des revendications précédentes, dans laquelle la composition comprend 3 à 10,5 % en poids, de préférence 4,5 à 7,5 % en poids, d'isohumulones, de tétrahydro-isohumulones et/ou d'hexahydro-isohumulones, de préférence d'isohumulones, par rapport au poids de la composition.

6. Composition selon l'une quelconque des revendications précédentes, dans laquelle la composition comprend de 10 à 35 % en volume, de préférence de 15 à 25 % en volume, par rapport au volume de la composition, d'un mélange comprenant 30 % (p/p) d'isohumulones, de tétrahydro-isohumulones et/ou d'hexahydro-isohumulones, de préférence d'isohumulones.

7. Composition pour l'effarouchement d'oiseaux et/ou de mammifères, où la composition est un répulsif pour la protection contre les dégâts provoqués par les oiseaux et/ou par les animaux sauvages, et dans laquelle la composition comprend :
au moins un agent de protection des plantes et/ou un agent de renforcement des plantes et un mélange,
**caractérisé en ce que** le mélange comprend au moins un composé choisi dans le groupe constitué par les humulones, les lupulones, les isohumulones, les produits d'oxydation des lupulones tels que les hulupones et les luputriones, les allo-isohumulones, les abeo-isohumulones, les anti-isohumulones, les spiro-isohumulones, les acides humuliques, les dihydro-isohumulones, les tétrahydro-isohumulones et les hexahydro-isohumulones, la composition comprenant de 5 à 30 % en volume, de préférence de 7 à 25 % en volume, de manière particulièrement préférée de 10 à 17 % en volume, par rapport au volume de la composition, d'un extrait au CO₂ complètement isomérisé de houblon.

8. Semence comprenant une composition selon l'une quelconque des revendications 1 à 7.

9. Utilisation d'un répulsif pour l'effarouchement d'oiseaux et/ou de mammifères, dans laquelle le répulsif comprend un mélange comprenant au moins un composé choisi dans le groupe constitué par les humulones, les lupulones, les isohumulones, les produits d'oxydation des lupulones tels que les hulupones et les luputriones, les allo-isohumulones, les abeo-isohumulones, les anti-isohumulones, les spiro-isohumulones, les acides huméliniques, les dihydro-isohumulones, les tétrahydro-isohumulones et les hexahydro-isohumulones.

10. Utilisation selon la revendication 9, dans laquelle le mélange est obtenu à partir de houblon.

11. Utilisation selon la revendication 9 ou 10, dans laquelle l'utilisation comprend le traitement de semences avec le répulsif pour l'effarouchement d'oiseaux et/ou de mammifères, où l'utilisation comprend notamment le traitement des semences avec le répulsif avant l'épandage des semences.

12. Utilisation selon l'une quelconque des revendications 9 à 11, dans laquelle le mélange contient des isohumulones, des tétrahydro-isohumulones et/ou des hexahydro-isohumulones, de préférence des isohumulones, et celles-ci sont utilisées pour l'effarouchement d'oiseaux et/ou de mammifères.

13. Utilisation selon l'une quelconque des revendications 9 à 12, dans laquelle le répulsif est une composition selon l'une quelconque des revendications 1 à 7.

14. Utilisation selon l'une quelconque des revendications 9 à 13, dans laquelle l'utilisation est effectuée pour la protection de semences, de plantes cultivées et/ou de plantes ornementales contre les dégâts provoqués par les oiseaux et/ou par les animaux sauvages.

15. Utilisation d'isohumulones dans un mélange qui a été obtenu à partir de houblon pour l'effarouchement d'oiseaux et/ou de mammifères.
